# EUROPEAN PATENT SPECIFICATION

(11) **EP 1 045 890 B1**
(45) Date of publication and mention of the grant of the patent: **29.09.2004**
(21) Application number: 99901540.7
(22) Date of filing: 29.01.1999
(51) Int. Cl.: C10C 5/00, C08H 5/04, C08G 16/02, C08L 97/02

(54) **NATURAL RESIN FORMULATIONS**
NATURHARZ-FORMULIERUNGEN
FORMULATIONS DE RESINES NATURELLES

(30) Priority: 30.01.1998 CA 2228418
(43) Date of publication of application: 25.10.2000
(60) Divisional application: 04001848.3
(73) Proprietor: Ensyn Renewables, Inc., Boston, Massachusetts 02116 (US)
(72) Inventor: FREEL, Barry, Greely, Ontario K4P 1E8 (CA); GRAHAM, Robert, Greely, Ontario K4P 1A2 (CA); GIROUX, Régi, Embrun, Ontario K0A 1W0 (CA)
(74) Representative: Caldwell, Judith Margaret
(86) International application number: PCT/CA1999/000051
(87) International publication number: WO 1999/038935

(56) References cited:
- WO-A-91/01341
- WO-A-91/11499
- US-A- 1 598 547
- US-A- 4 233 465

## Description

The present invention relates to the production and use of a natural resin, derived from wood, bark, forest residues, wood industry residues and other biomass materials using fast pyrolysis, and its use as an adhesive in the manufacture of manufactured wood products.

### BACKGROUND OF THE INVENTION

"Resin" is a generic term used to describe both natural and synthetic glues which derive their adhesive properties from their inherent ability to polymerize in a consistent and predictable fashion. The vast majority of modem industrial resins are synthetic, and are normally derived from petroleum feedstocks. Two of the most important classes of synthetic resins, in terms of production volume and total sales are phenol formaldehyde (P/F) and urea formaldehyde (U/F) resins. In both cases, the principal market application is for use as a glue binder in man-made wood products.

Phenol formaldehyde (P/F) resin, because of its resistance to moisture, has a particular value in external (outdoor) or damp environments. It is therefore, the leading adhesive used for the manufacture of plywood, oriented strand board (OSB) and wafer board (Sellers, 1996). P/F resins are also widely used in laminates, insulation, foundry materials, moulding compounds, abrasives and friction materials for the transportation industry (ie., clutch facings, disk facings and transmission components). As its name suggests, the principal ingredients in P/F adhesives are phenol and formaldehyde. However, the finished product is actually a mixture of P/F, caustic, and water,. Assorted fillers, extenders and dispersion agents may then be added for specific adhesive applications.

The formaldehyde ingredient in P/F resin is derived from methanol, normally produced from natural gas. The phenol ingredient is typically manufactured from benzene and propylene via a cumene intermediate. In addition to P/F adhesive manufacture, phenol is used in the manufacture of other important products, for example, Bisphenol A and Caprolactam. Bisphenol A is a principal component in polycarbonates used in automotive parts, compact discs and computer discs, and Caprolactam is a raw material for Nylon 6, used within stain resistant carpets.

When mixed together in water and with caustic added as a catalyst, phenol and formaldehyde undergo a condensation reaction to form either ortho- or paramethylolphenol. The resultant PF resin, as shipped to market, is a dark brown liquid which is polymerized and cross-linked to an intermediate degree. It is then cured in the final board, laminate or other product without catalyst simply with the addition of heat at which time the final polymerization and cross-linking take place via condensation reactions. The release of free formaldehyde during the resin manufacture and resin use stages is a concern from a health and safety perspective. Furthermore, the costs associated with formaldehyde production have increased and there is a need in the art for alternative materials for use as wood adhesives and binders.

One alternative for phenol that has been considered is lignin. Lignin and P/F formaldehyde resins are structurally very similar. Lignin is a random network polymer with a variety of linkages, based on phenyl propane units. Lignin-based adhesive formulations have been tested for use within plywood, particle board and fibre board manufacture. The addition of polymeric lignin to P/F formulations has been found to prematurely gel the P/F resin thereby reducing shelf life, limiting permeation of the lignin-P/F resin into the wood and producing an inferior mechanical bond (Kelley 1997).

Pyrolysis of lignin has been considered as a potential approach to upgrading lignin to more usable phenolic type resins. While relatively mild thermal or thermocatalytic processing at low pressures can be used to break the lignin macromolecules into smaller macromolecules, lignin segments and monomeric chemicals, such procedures may cause condensation reactions producing highly condensed structures such as char and tar, rather than depolymerized lignin fragments or monomeric chemicals.

A further alternative for the production of phenolic compounds involves use of pyrolytic oils produced in the fast pyrolysis of wood and other biomass. These pyrolytic oils are comprised of a complex mixture of compounds including phenol, guaiacol, syringol and para substituted derivatives, carbohydrate fragments, polyols, organic acids, formaldehyde, acetaldehyde, furfuraldehyde and other oligomeric products (Pakdel et at 1996). However, wood-derived lignin and lignin-rich pyrolytic bio-oils have lacked consistency and have exhibited inferior properties when compared with phenol-formaldehyde resins (Chum et al. 1989; Scott 1988; Himmelblau 1997; Kelley et al., 1997).

Due to the complexity of pyrolytically-derived bio-oils, further processing is required in order to obtain suitable fractions useable as a replacement for phenol, or to be considered as an extender for petroleum-derived phenol within P/F resin formulations. Typically the phenolic derived from pyrolysis oils requires separation prior to use in order to remove impurities. One such method involves water extraction of the whole-oil, followed by precipitation and centrifugation or filtration and drying of the non-aqueous fraction to prepare a "pyrolytic lignin" fraction (Scott 1988). However, adhesive formulations prepared using pyrolytic lignin were found to be inferior to P/F resin formulations in both colour and odour, and required long press times in order to avoid de-lamination of waferboards. Tests indicated that none of the pyrolytic lignin samples meet the internal bond (IB) test requirement (Scott 1988, see pp. 91-92) .

In US 4,209,647 (June 24, 1980) a fractionation method for the preparation of a phenol- enriched pyrolytic oil is disclosed which involved a multistep process that selectively solubilized neutral phenols, and organic acids of the whole-oil with NaOH followed by extraction with methylene chloride. However, this multistep process is costly, labourious, time consuming and involves the use of volatile solvents that are known to be health threatening.

Another fractionation method involves adding ethyl acetate to whole-oil to produce ethyl acetate soluble and insoluble fractions, followed by a water wash and NaHCO₃ extraction of the ethyl acetate soluble fraction, with evaporation of the ethyl acetate to produce a fraction containing phenolic and neutrals (P/N) derived from the pyrolytic oil (Chum et al. 1989, US Patents 4,942,269, July 17, 1990, and 5,235,021, August 10, 1993). Preliminary results with the P/N fractions revealed that fractionated pyrolytic oils could be used within P/F resin compositions, as P/N containing resins exhibited equivalent gel times as noted for P/F resins. However, the fractionation protocol is not suitable for industrial scale production, nor is this process cost effective for the preparation of alternative components for use within P/F resins at a commercial scale (Kelley et al., 1997).

All of the process disclosed within the prior art as outlined above involve the extraction of a phenol-enhanced fraction from the whole pyrolytic oil product using solvents and alkali.

### SUMMARY OF THE INVENTION

The present invention relates to the production and use of a processed natural resin, derived from wood, bark and other biomass residues using fast pyrolysis. Specifically, the natural resins (NR) of this invention are obtained from the fast pyrolysis of wood products.

A first aspect of the invention provides for a processed natural resin comprising:
i) a free phenol content from 0.001% to 0.1% (w/w);
ii) a total phenolic content from 64% to 73% (w/w);
iii) a smoky odour;
iv) an acids content of up to 5% (w/w); and
v) a carbonyl compound content of between 22 to 27 % (w/w).

A second aspect of the invention provides for a method for preparing the processed natural resin described above, comprising the steps of:
i) obtaining a product vapour stream from a fast pyrolysis biomass reactor;
ii) exposing the product vapour stream to a first rapid quenching step so as to remove a first set of components from the product vapour stream, thereby producing a selected product vapour stream; and
iii) exposing the selected product vapour stream to a second rapid quenching step; to produce a product
iv) processing the product to reduce organic acid content thereby producing the processed natural resin.

By processing to remove organic acids, a natural resin can be produced which can be used as a substitute for either some of the phenol component of a phenol-containing formaldehyde resin or for both the phenol and formaldehyde components of the resin, or as a substitute within urea formaldehyde type resins.

The natural resins of the present invention exhibit high reactivity due to the presence of a high number of active sites for binding and cross linking during polymerization.

According to the above method the first set of components is removed from the product vapours within a first condenser. The natural resin product of step (iii) is obtained from the selected product vapour using direct-liquid contact condensers, within a secondary condenser, and other down stream components including a demister and a filter bed.

This invention is also directed to an adhesive composition that comprises the NR as defined above. Furthermore, this invention is directed to an adhesive composition comprising NR up to 40% (w/w) of the adhesive composition.

This invention is also directed to an adhesive composition as defined above comprising a second adhesive resin selected from a phenol-containing or urea containing formaldehyde resin. Furthermore, this invention relates to an adhesive composition as defined above wherein the phenol-containing or urea-containing formaldehyde resin is selected from the group consisting of phenol formaldehyde, urea formaldehyde, phenol melamine urea formaldehyde, melamine urea formaldehyde, and phenol urea formaldehyde.

This invention also relates to an adhesive composition as defined above wherein the NR comprises up to 60% (w/w) of the adhesive composition. Furthermore, the adhesive composition of this invention may further be characterized in that a portion of the formaldehyde, within the formaldehyde-phenol resin is replaced with NR, and wherein the NR replaces up to about 50% of the formaldehyde content of the resin. Preferably the adhesive composition comprises a formaldehyde:phenol ratio from about 1.5:1 to about 3:1. This invention is also directed to an adhesive composition wherein a portion of the formaldehyde within a urea-formaldehyde resin is replaced with NR.

This invention relates to a natural resin that is washed, and to mixtures of natural resin, comprising the unprocessed natural resin and washed natural resin defined above. Furthermore, this invention is directed to adhesive compositions comprising washed natural resin and natural resin mixtures. This invention also includes phenol-containing formaldehyde resins comprising washed natural resin that replaces up to 100% of the phenol content of the phenol-containing resin.

This invention also embraces a wood product prepared using the adhesive compositions as defined above. Preferably, the wood product is selected from the group consisting of laminated wood, plywood, particle board, high density particle board, oriented strand board, medium density fiber board, hardboard or wafer board. Furthermore, the wood product prepared using the adhesive composition of this invention is used for exterior applications.

Use of a fast pyrolysis process to produce the bio-oil is beneficial in that the fast pyrolysis process depolymerizes and homogenizes the natural glue component of wood, that being lignin, while at the same time other constituents are also depolymerized including cellulose and hemicellulose. The yield of product depending upon the biomass feedstock varies from 15-20% of the feedstock and exhibits properties that are useful within, for example, phenol-containing, or urea-containing formaldehyde resin compositions. The product can be substituted for some of the phenol, or some of the phenol and formaldehyde, content within phenol-containing formaldehyde resins, and such formulations meet or exceed current phenol formaldehyde resin industry specifications. Furthermore, product can substitute for some of the formaldehyde within urea-containing formaldehyde resins. The product can completely substitute for the phenol content in phenol resins, and can also be used within urea-containing formaldehyde resin formulations.

### BRIEF DESCRIPTION OF THE DRAWINGS

These and other features of the invention will become more apparent from the following description in which reference is made to the appended drawings wherein:
**FIGURE 1** shows a schematic of a fast pyrolysis system.
**FIGURE 2** shows the relationship between the viscosity of NR with increased temperature.
**FIGURE 3** shows the infrared spectra obtained from, FIGURE 3A: NR, and FIGURE 3B: alkali NR. The bands of the spectra are assigned as follows:
   1. O-H stretchings of carboxilic acids, alcohols and phenols (this band is not selective);
   2. C-H stretchings of aromatic and aliphatic compounds;
   3. C=O stretchings of carboxylic acids ands aldehydes/ketones;
   4, 4'. aromatic rings, in-plane skeletal bandings;
   5. O-H phenolic banding;
   6. C-O stretching of primary alcoholic groups.

### DESCRIPTION OF PREFERRED EMBODIMENT

The present invention relates to the production and use of a natural resin, derived from wood bark and other biomass residues using fast pyrolysis.

By "bio-oil" or "whole-oil" it is meant the whole liquid fraction obtained following the fast pyrolysis of wood or other biomass. The whole oil is obtained from the product vapour which is produced along with char following pyrolysis. Upon removal of the char the product vapour is condensed and collected within one or more condensers which are typically linked in series. Whole-oil, or bio-oil refers to the combination of the condensed products obtained from all of the condensers.

By "phenolics" it is meant polymeric phenols derived from lignin (lignin is a phenolic polymer which holds wood and bark fibres together and which gives wood its strength).

By "enhancers" it is meant carbonyl compounds, typically light aldehydes and ketones.

By "selected product vapour" it is meant the product vapour that remains a vapour following removal of char and the subsequent removal of other pyrolytic products condensed by at least one rapid quenching step. The selected product vapour is typically characterized in having a lower acid content than a product obtained as a result of the earlier, at least one quenching step. Furthermore, the selected product vapour comprises a higher molecular weight, viscosity, pH, phenolics content when compared with the earlier obtained product.

By "phenol-containing formaldehyde resin" it is meant adhesive compositions that comprises phenol as one of its ingredients. Such resins include but are not limited to phenol formaldehyde (PF), phenolic melamine urea formaldehyde (PMUF), and phenol urea formaldehyde (PUF) resins. Similarly, by "urea-containing formaldehyde resins" it is meant adhesive compositions comprising urea as one of its ingredients, for example, but not limited to, urea formaldehyde (UF), phenol urea formaldehyde (PUF), phenol melamine urea formaldehyde (PMUF), and melamine urea formaldehyde (MUF) resins. Without wishing to be bound by theory, it is thought that the addition of NR to urea-containing resins adds or complements the phenol content of these resins due to the high phenolic content of NR. Therefore, a UF resin that is partially replaced with NR may be considered a PUF-like resin.

The natural resin (NR) of this invention is not a whole bio-oil product, rather it is a selected refined fraction of the whole liquid product, preferably produced from the fast pyrolysis of wood. However, other processes that are able to liquefy wood may also be used to prepare a product from which a NR may be obtained. The refined fraction is primarily comprised of depolymerised lignin and other reactive components including phenolics which provide an array of active sites for binding and cross linking within NR formulations. Non-reactive components are removed during the preparation of the NR. The isolated NR fraction is not subject to solvent or other fractionation processes used in the prior art, nor is it condensed (i.e. subject to condensation reactions) as would be typically done for conventional, or vacuum pyrolysis liquid products. Without wishing to be bound by theory, it is possible that the omission of such condensation reactions during the production of the NR of this invention is a primary reason for the high reactivity of NR as a resin agent.

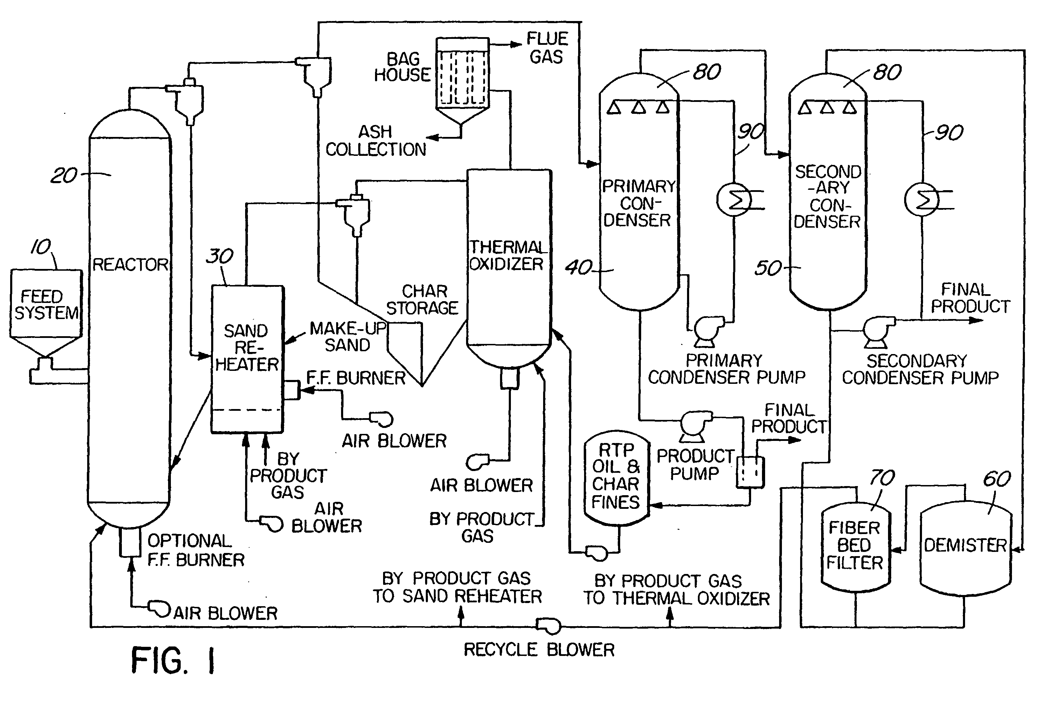

Fast pyrolysis of wood or other biomass residues results in the preparation of product vapours and char. After removal of the char components from the product stream, the product vapours are condensed to obtain a whole-oil, or bio-oil product from pyrolysis. A suitable fast pyrolysis process for preparing such a bio-oil is described in WO 91/11499 (Freel and Graham, published August 8, 1991), and is diagrammatically presented in Figure 1. Briefly, the system includes a feed system (10), a reactor (20), a particulate inorganic heat carrier reheating system (30), and for the purposes of the invention described herein, primary (40) and secondary (50) condensers, through which the product vapours produced during pyrolysis are cooled and collected using a suitable condenser means (80). A product is obtained from the secondary condenser, de-mister (60) and fiber filter bed (70), or a combination thereof. However, it is to be understood that analogous fast pyrolysis systems, comprising different number or size of condensers, or different condensing means may be used for the selective preparation of the NR of this invention.

A portion of the product vapours produced during fast pyrolysis are rapidly quenched within the primary condensation collection means outlined above. This rapid quenching enables the selective separation of a selected product vapour from the condensed liquid product which remains within the primary condenser. A NR is collected from the selected product vapour, obtained from components down stream from the primary condenser, for example, but not limited to, the secondary condenser, demister, and fiber filter bed. It is to be understood that other fast pyrolysis systems, with various condenser means arrangements may be effectively used to partially purify the product vapour by removing a liquid fraction from the product vapour and producing a selected product vapour, from which a NR fraction maybe obtained.

The condenser system used within the fast pyrolysis reactor system, outlined in Figure 1, involves the use of direct-liquid contact condensers (80) to cool the pyrolytic oil product. In the preferred embodiment liquid, used within these condensers to cool the pyrolytic product, is obtained from the corresponding cooled primary or secondary condenser product (90; (Figure 1). However, as would be evident to one of skill in the art, any other compatible liquid for cooling the product within the secondary condenser may also be used for this purpose. Furthermore, it is considered within the scope of this invention that other scrubber or cooling means including heat exchanges comprising solid surfaces and the like may also be used for cooling the product vapours, including the selected product vapour.

By thermal fraction it is meant the process of obtaining a selective fraction of the product vapour obtained from fast pyrolysis following removal of products from the product vapour stream that are rapidly quenched (e.g. from about 500°C to about 20°C within milliseconds). Surprisingly, the product that is left as a selected product vapour following the rapid quenching step can be directly utilized as a replacement of constituents within adhesive resins, such as phenol formaldehyde, urea formaldehyde, or related resins as defined above.

Without wishing to be bound by theory, it is thought that the rapid quenching of product vapours within the first condenser removes compounds that interfere with the use of bio-oils within adhesive resin formulations. The products removed from the product vapour within the first condenser are those that are readily soluble and rapidly quenched. The less soluble compounds and those that form aerosols or some other form that assists in their remaining within the product vapour, are transferred to the secondary condenser. This transferred product vapour is then a selected product vapour, which is comprised of a predominantly phenolic fraction, and also containing aldehydes, and provides the NR with its desirable properties for use within adhesive formulations.

The NR of this invention is processed to removed the organic acid content of the resin. Any suitable method may be employed for this process, for example, and not wishing to be limited to this method, the NR of this invention may be washed in water by mixing the NR in water, allowing phase separation to take place, and recovering the oil fraction. Such a processed NR is, for the purposes of this invention referred to as "NRP". The NRP, prepared in this manner, comprises the phenolic and aldehyde content of an NR, with a dramatically reduced organic acid content when compared with unprocessed NR, and is a more concentrate form of an NR. As a result NRP contains up to about 80% (w/w) phenolics.

It has also been observed that NRP diluted with unprocessed NR produces a product suitable for use within adhesive resin formulations. For example NR50 refers to a 50-50 mix of NRP and unprocessed NR, however, as would be evident to one of skill in the art, other mixture ratios may also be obtained and used for the purposes disclosed herein.

The NRP so produced has been substituted for some of the phenol content within PF resins, and such formulations meet or exceed current PF resin industry specifications. More specifically NR has been substituted up to about 60% of the phenol content within PF resins, and preferably up to about 100% of the phenol content within a PF resin. Resins so produced may comprise up to about 40% (w/w) of NR. Similarly, NR has also been used as replacement within PMUF and, PUF resins. Furthermore, the NR of this invention has successfully replaced up to about 60% (w/w) of the urea formaldehyde within UF resins, and has been effectively used within PMUF and MUF resins.

As a result of selecting a specific thermal fraction for the preparation of NR, the recovery technique is more selective than solvent extraction-based methods. For example, the P/N fraction extracted using ethyl acetate (e.g. US 4,942,269; US 5,235,021), results in a fraction comprising any compound that is soluble in this solvent and that is co-extracted along with the desired-for resin compounds. Several of these co-extracted compounds are odorous (e.g. lactone, an acrid compound) while others dilute the P/N resin. The thermal recovery technique of this invention is selective in that essentially all of the desirable resin components (natural phenolics derived from lignin) are recovered, while other non-desired compounds are removed within other fractions. As a result, the NR of this invention exhibits many beneficial properties over prior art pyrolytic oil extractions and requires significantly less preparation. For example:
1. NR has a pleasant "smoky" odour, and lacks the acrid smell of solvent extracted fractions - when used within adhesive applications, there is no residual odour, solvent extracted preparations, such as P/N extractions, requires further processing to remove the acrid smell;
2. in solvent extracted processes, including the process used to obtain P/N, the solvent reacts with residuals in the fraction that is not used for P/N, to form salts. These salts must be recovered using a recovery boiler requiring additional costs, and the residual bio-oil is not available for other commercial applications. The NR, on the other hand, is isolated as a thermal cut which still permits the remaining bio-oil to be processed as required for other commercial applications without contamination;
3. the fast pyrolysis method used for the preparation of bio-oil, including NR, has been successfully scaled up from bench-top trials to industrial/commercial production levels (see WO91/11499). Therefore, NR preparations are easily produced on a commercial scale.

### Characteristics of NR

The NR produced by the method of this invention has been found to be consistent between batch to batch productions runs of NR (as tested when used for OSB production, see below), even when using different feedstocks including hardwood and softwood.

Molecular weight is typically used as an index for adhesive resin reactivity and viscosity, with higher molecular weights indicating higher viscosity, and a corresponding lack of active sites necessary for cross-linking and binding strength in commercial resin formulations. However, with the NR product prepared following the method of this invention, the relationship between molecular weight, viscosity and reactivity is not valid.

The free phenol content of a resin formulations is also used to determine the suitability of alternative materials in PF resin formulations. The processed NR produced following the method of this invention is characterised in having a very low free phenol content, from about 0.001 to about 0.05% (w/w), yet the total phenolic content is quite high up to about 80% . It is the phenolic content which is very reactive and provides an array of active sites for binding and cross linking within NR formulations.

Furthermore. the unprocessed NR (NR) is characterized by the following parameters, however these parameters even though typical are obtained from one sample and variations in these values are to be expected:

| | Water content (wt%) | pH | Density (g/ml) | Solid content (wt%) | Ash content (wt%) | Viscosity at 75°C (cSt) |
|---|---|---|---|---|---|---|
| NR | 14 | 2.2 | 1.268 | 0.706 | 0.105 | 59.8 |

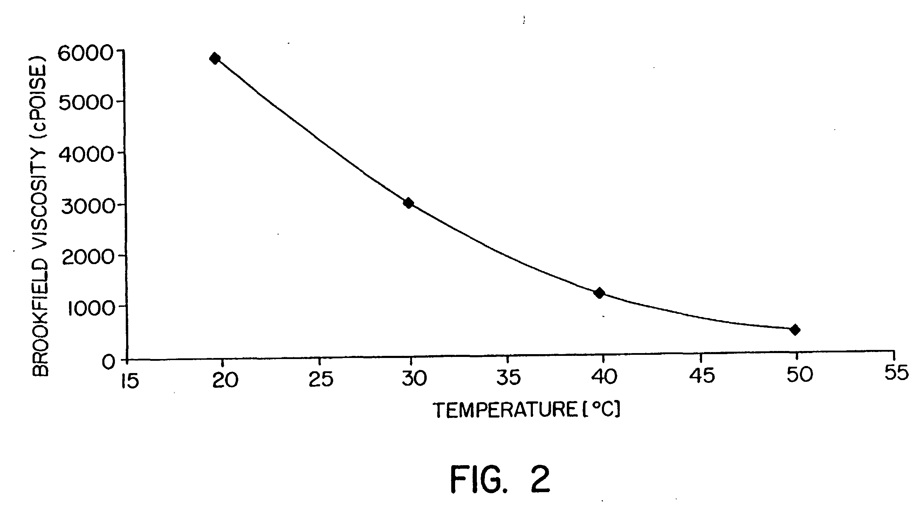

The viscosity of NR over a range of temperatures is presented in Figure 2.

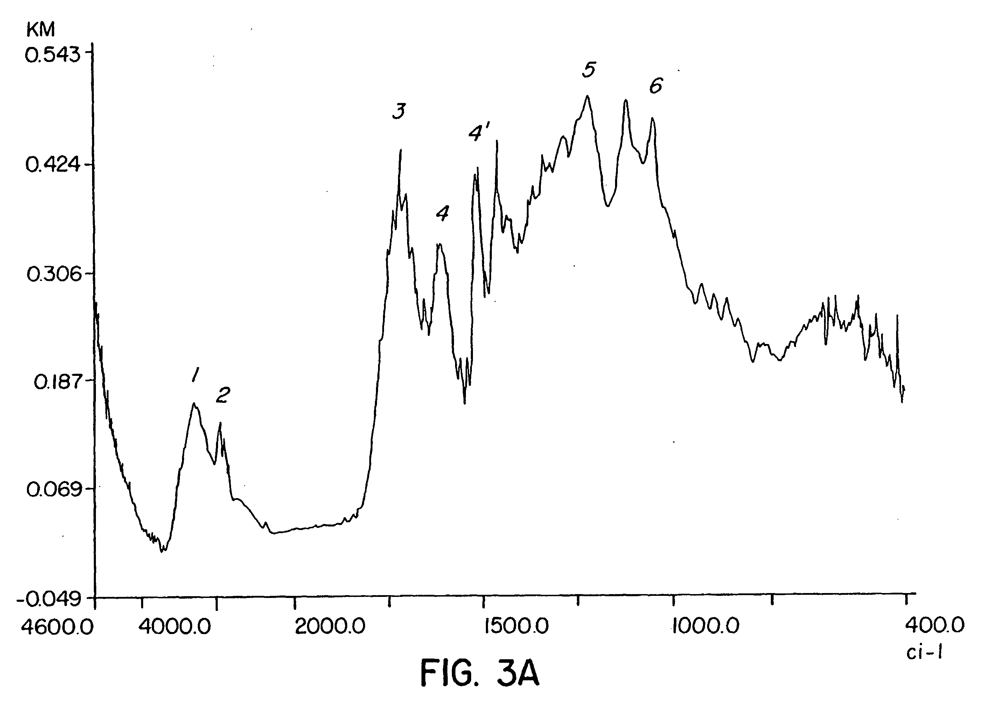

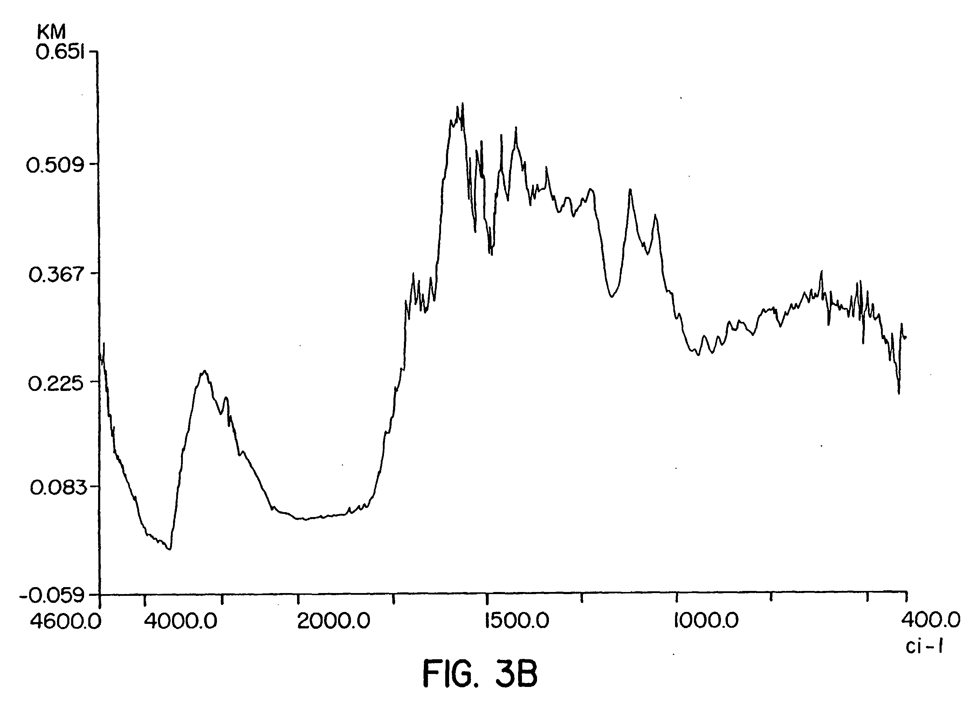

The infrared spectra of NR and alkali NR are presented in Figure 3A and 3B, respectively. Similar spectra are observed for both NR samples. The 1700 cm⁻¹ band that corresponds to the carbonylic group (band identified as 3) is reduced in Figure 3B, since R-COOH becomes R-COO⁻ under the alkali conditions.

The unprocessed NR comprises from 10 to 20% water, however, it is insoluble in water due to its low polarity and high content of non-polar organics. By increasing the pH of the unprocessed NR (to about 10) and converting it into its phenoxide ion form it obtains a gum-like consistency, is water soluble and can be used within it obtains a gum-like consistency, is water soluble and can be used within formaldehyde-phenol formulations. The unprocessed NR is soluble in organic solvents for example acetone, methanol, ethanol and isopropanol. Due to the hydrophobicity of unprocessed NR, it is chemically compatible in the formulation of phenolic-based resins. Unprocessed NR is soluble in a mixture of water/phenol, and when reacted with formaldehyde, gives methyol-water soluble derivatives.

Infrared analysis of unprocessed NR, and alkali NR are exhibited in Figure 2A and Figure 2B. The same bands are detected between the two NR samples, however, in the alkali NR (Figure 3B), the 1700 cm⁻¹ band (relating to the carbonylic group #3; R-COOH) becomes R-COO⁻ under the alkali conditions.

Calometric analysis indicates that unprocessed NR has a net caloric value of 4355 cal/g (18.22 MJ/kg), with a gros caloric value of 4690 cal/g (19.62 MJ/kg).

Unprocessed NR is stable and homogenous and has been stored in excess of 12 months without loss of its properties.

The NRP preparations of the invention exhibit similar properties to those of unprocessed NR with the notable exception that the phenolics content of NRP increases up to about 80% (w/w), and the pH is more neutral. The exact pH of NRP is difficult to determine as water is required for this test, however, the acid content of NRP can be determined using gas chromatography (GC). GC analysis indicate that up to 90% or more of the organic acid content of NR is removed as a result of the washing procedure. Due to the removal of the organic acid content, NRP is a more concentrated form of NR. The content of phenolics, and the pH of NR-NRP mixtures, e.g. NR50, will vary depending upon the proportions of NR or NRP within the mixture.

NR-50 is approximately 50% NRP and 50% raw NR. NR-50 is prepared by blending two NR products, raw NR from the process and NRP.

### NR60

NR-60 is a liquid which is approximately 60% NRP. However, the term "NR60" is not representative of a single NR product. NR60 is not prepared by blending raw NR and NRP as the case with NR-50. NR-60 is prepared from raw NR, after raw NR is devolatilised thereby concentrating the raw NR to NR-60 (i.e., increasing the NRP concentration by driving of non-NRP volatiles). The non-NRP volatiles may be driven of using any suitable means, for example, but not limited to, heat, or evaporation under vacuum. It is to be understood that the term "NR60" represents an NR that can comprise a variety of NRP concentrations depending upon the NRP content initially used. "NR60" therefore includes an NR that comprises from about 40% to about 90% NRP. NR60 may be obtained from a variety of lignocellulosic feedstock sources including softwood, hardwood, bark, white wood, or other lignocellulosic biomass feedstocks, for example, bagasse (sugar cane residue). The use of PF/NR60 resins are discussed in Examples 7-10, a specific NR60 resin formulation, obtained from bark, (NRB) is discussed in Example 10.

Unlike NR or NR-50, the characteristic smoky odour is significantly reduced in NR-60 during the devolatilisation/concentration process

NR-60 can be derived from NR or from selected NR fractions derived from the fast pyrolysis of wood as described above (ie. from certain condensers, filters, demisters, etc.), or from the whole raw bio-oil as produced in the pyrolysis process. NR fractions and whole bio-oil can be processed and concentrated in several ways in order to produce NR-60; evaporation or distillation (for example, falling film, vacuum distillation, wet film evaporation, etc., or selective condensation of the raw NR, NR fractions or whole bio-oil), selective precipitation, or any other physical or chemical process which removes, evaporates, isolates or otherwise drives off certain acids, volatiles, water and other light components which are less effective in terms of resin properties and which contain odorous components.

With out intending to limit the present invention in any manner, NR-60 can be prepared by heating NR material (ie., raw NR, NR fractions or whole bio-oil) under vacuum to a temperature which is sufficient to devolatilize odorous and non-resin components. The water content is monitored to determine the degree of devolatilization so that a final water content of between about 1 and about 10% is obtained. Preferably the final water content is between about 3 and about 5%.

Once the desired degree of devolatilization has been reached, water is added back in order to reduce the NR-60 product viscosity to the desired spec. Typically, sufficient water is added to bring the water content to a level in the range of from about 10 to about 25%. Preferably the final water content is about 15 to about 18%.

Viscosity, acid content and NRP content determination for NR-60 comprising 60% NRP is characterized with acids (dry wt%) 2-4%; water content between 15-18%; NRP is about 60%, and viscosity at 70°C is in the range of 30 to 150cSt. An NR60 comprising a variety of NRP concentrations can be prepared in a similar fashion to that as indicated above.

A comparison of some of the characteristics of unprocessed NR(NR), NR50 and NRP are provided below:

| Component | NR | NR50 | NRP | NR60* |
|---|---|---|---|---|
| Acids (dry wt%) | 10-12 | 5-10 | 0-5 | 2-4 |
| Phenolics (dry wt%) | 35-38 | 38-53 | 64-73 | 50-65 |

| | | | | |
|---|---|---|---|---|
| *These values may differ in NR60 depending upon the final concentration of NRP used in the NR60 formulation. | | | | |

| | | | | |
|---|---|---|---|---|
| Enhancers (dry wt%) | 12-15 | 15-19 | 22-27 | - |
| pH | 2.4-2.6 | 2.5-2.8 | 3+ | ⁻2.5 |
| viscosity (70°C)cSt | 81-115 | 100-300 | 300+ | 30-150 |
| Water (wet wt%) | 11-18 | < 18 | < 18 | 15-18% |
| average MW (Daltons) | 500-1000 | 700-1200 | 1000-2000 | - |

### NR-containing Phenol Formaldehyde (PF), or Urea Formaldehyde (UF) Resins

In order to formulate the NR of the invention within phenol-containing formaldehyde, or urea-containing formaldehyde resins, phenol or urea, water, paraformaldehyde, and other ingredients of the adhesive are mixed together and heated if required to dissolve the ingredients. If heated, the mixture is cooled prior to the addition of NR. Caustic (for example NaOH) is added to the mixture containing phenol or urea, formaldehyde and NR, to a desired pH. The addition of caustic ensures the solubilization of the NR, and initiates the reaction. This mixture may then be heated or cooled, and more caustic added during the preparation of the resin, as required. The resin is typically maintained at 10°C until use, and exhibits similar stability associated with commercial PF resin formulations. Phenolic melamine urea formaldehyde (PMUF), melamine urea formaldehyde (MUF), phenol urea formaldehyde (PUF) resins are prepared in a similar manner.

NR of the invention be added up to about 60% (w/w) of the phenol content of the resin, or preferably up to about 100% (w/w) of the phenol content may be substituted. Furthermore, the formaldehyde content of phenol-containing or urea-containing resins may be substituted with NR due to the natural aldehydes present within NR, for example NR can be used to replace up to about 50% (w/w) of the formaldehyde content of these resins. Similarly, up to about 60% (w/w) of the urea-formaldehyde content of a UF resin may be replaced using NR. Therefore, PF, UF and related resins may be formulated that contain up to about 40% (w/w) NR of the total resin composition.

### Board manufacture suing NR-containing adhesives

The phenol-containing or urea-containing formaldehyde resins prepared above may be used for the production of a range of board products, for example, but not limited to, laminate wood boards, plywood, particle board, high density particle board, oriented strand board, medium density fiber board, hardboard, or wafer board. Preferably, NR-containing PF resins are used within boards to be subject to exterior use due to the excellent water repellency of the resin. Typically UF resins are not desired for outside use, however, NR-containing UF resins may have application for exterior use due to the reduced swelling observed in boards prepared with urea formaldehyde adhesives comprising NR, compared with boards prepared using commercial UF resin.

NR containing PF or UF resins can be used for the production of oriented strand board (OSB) as outlined below. However, it is to be understood that this application of NR-containing resin is not to be considered limiting in any manner, as other wood derived products prepared using commercially available PF, UF, or related resins, which are commonly known within the art, may be prepared using resin formulations comprising NR.

Oriented strand boards may prepared using standards methods that are known to those of skill in the art. For example, but not to be considered limiting in any manner, the production of OSB may involve the following parameters:
- wood matrix:: particulate wood product, wood chips, wafers, veneer or plywood etc.
- Panel thickness:: from about 1/16" to2"
- Resin content:: from about 0.5 to about 20.0%
- Wax content:: from about 0.5 to about 5%
- Mat moisture:: from about 2 to about 10%
- Press time:: from about 2 min to 30 min
- Press temperature:: from about 150 °C to about 275°C

It is to be understood that these parameters may be adjusted as required in order to produce a suitable board product using NR-containing resins of this invention.

Oriented strand boards, or other board types, as listed above, that are prepared using NR-containing PF resins are readily tested for suitability within the industry. For example, the OSB boards prepared above have been tested according to the Canadian product standard for OSB (CSA 0437.1-93, April 1993). These tests include; determination of density, internal bond (IB), modulus of rupture (MOR), and modulus of elasticity (MOE). Results of these tests indicate that phenol may be replaced by NR up to about 60% (or up to 100% in the case of NRP), and that urea-containing resins may also be replaced by up to 60% NR, and produce a OSB product that meets industrial standards, and that is equivalent to OSBs prepared using commercially available phenol-containing, or urea-containing formaldehyde resins. Furthermore, OSB boards prepared with NR-containing resins require less formaldehyde within resin formulations for equivalent cross-linking and binding properties as typically found with control resin formulations. Without wishing to be bound by theory, it is thought that the natural carbonyl components (such as aldehydes and ketones) within NR permits the use of less formaldehyde. In applications which require lower strength adhesive, the NR can be used alone without any addition of formaldehyde, but it is preferable to add formaldehyde to obtain a better resin. These carbonyl compounds have a molecular weight from about 30 to about 800 Daltons, and comprise about 23% of the NR.

The NR produced following the method of this invention has a dark brown colour, and when formulated into a resin, results in a dark reddish brown colour. However, during production runs using NR, OSB boards are lighter in colour than PF control boards. Furthermore, the NR has a mild, pleasant odour, yet OSB boards prepared using NR have no resultant odour. The odour can be reduced following heating of the NR, or through the removal of volatiles via flushing. The NR of the invention is also further processed, to raise the pH, for example by washing raw NR in the presence of water, and recovering an NRP fraction which exhibits a higher content of phenolics, a more neutral pH, and is a more concentrate form of law NR.

### Examples

### Example 1: Method for obtaining, and the characteristics of, unprocessed NR

Natural resin was obtained using red maple feedstock within a fast pyrolysis reactor as described in WO 91/11499. Red maple feedstock is supplied to the reactor at a feedstock to heat carrier ratio of from about 5:1 to about 200:1. The char is rapidly separated from the product vapour/gas stream, and the product vapour rapidly quenched within the primary condenser using a direct liquid contact condenser. The compounds remaining within the product vapour are transferred to a secondary condenser linked to the primary condenser in series. The product vapour is then quenched using a direct-liquid contact condenser within the secondary condenser, and the condensed product collected. Any remaining product within the product vapour is collected within the demister and filter bed (see Figure 1). The secondary condenser product, demister and filter bed products are pooled together to comprise NR. The yield of unprocessed NR, using red maple as a feedstock, is 18%.

The unprocessed NR is characterized as exhibiting a low free phenol content ranging from 0.001 to 0.1% (w/w); total phenolic content from about 35-80% (w/w); a dark brown colour and a mild, pleasant smoky odour; a pH of about 2.0 to about 3.9; insolubility in water; and solubility in organic solvents including acetone, methanol, ethanol and isopropanol.

Unprocessed NR is readily washed with water to produce NRP which is characterized in having a more neutral pH, and up to 90% less organic acid content when compared with NR. Furthermore, the phenolic content of NRP is up to about 80% (w/w) or more, due to the removal of the organic acid component, and is a more concentrate form of NR.

A comparison of the products collected from the primary condenser (1°), unprocessed NR (NR) (obtained from the secondary condenser, demister, and fiber filter bed) are presented below. The values for NRP and NR50 are presented for comparison:

| Component | 1° | NR | NR50 | NRP |
|---|---|---|---|---|
| Acids (dry wt%) | 15-20 | 10-12 | 5-10 | 0-5 |
| Phenolics (dry wt%) | 18-21 | 35-38 | 38-53 | 64-73 |
| Enhancers (dry wt%) | 6-8 | 12-15 | 15-19 | 22-27 |
| pH | 2.2-2.3 | 2.4-2.6 | 2.5-2.8 | 3+ |
| viscosity (70°C) cSt | 5-15 | 81-115 | 100-300 | 300+ |
| Water (wet wt%) | 18-26 | 11-18 | < 18 | < 18 |
| average MW | 100-300 | 500-1000 | 700-1200 | 1000-2000 |

### Example 2: Replacement of phenol within NR-containing PF resins

The unprocessed NR produced according to the method of Example 1 was formulated into a resin according to industry standards except that 40% of the phenol content was replaced by the NR. The resultant formulation was termed E-L-1-6. E-L-1-6 was compared with an commercially available PF resin (Tembec CL300), and E-K-4-6, a PF resin that prepared according to industry standards (Table 1) which contained 100% phenol, within OSB production.

Typical NR resin formulations involved loading phenol, water and paraformaldehyde into a kettle and heating to 95°C to dissolve the paraformaldehyde. The mixture was cooled to 45 °C and the NR added. Caustic (NaOH) was then added to the desired pH thereby solubilizing the NR and initiating the reaction. During the addition of caustic, the mixture is maintained at 45 °C for the first caustic addition (approximately 2/3 of the amount required). The mixture is then slowly heated to 90°C over a 30 min period over which time the resin is monitored for viscosity and subsequently cooled prior during which the remaining caustic is added. The resin was maintained at 10°C until use.

**Table 1:**

| **comparison of properties of unprocessed NR (NR) and phenol based resins** | | | | |
|---|---|---|---|---|
| Resin | Viscosity (cP) | pH | Caustic content | Resin Solids |
| NR: E-L-1-6 | 78.5 | 10.05 | 5.7 | 42.4 |
| Control:E-K-4-6 | 130 | 10.41 | 5.7 | 41.8 |

The OSB's were prepared following standard industrial procedures using either E-L-1-6 (NR), with the pH adjusted to 10.4, E-K-4-6 (control) or CL300. The parameters for OSB production were as follows:
- Strands:: 3 inch poplar from an OSB mill
- Panel type:: homogenous
- Panel thickness:: 7/16"
- Panel size:: 18" x18"
- Resin content:: 2.0%
- Wax content:: 1.5%
- Mat moisture:: 5.5%
- Press time:: 3 min or 4.5 min
- Press temperature:: 215°C
- Replication:: 4

The prepared OSB were tested for the following properties: density, IB (internal bond), MOR (modulus of rupture), and MOE (modulus of elasticity), according to the Canadian product standard for OSB (CSA 0437.1-93, April 1993):

The test results are presented in Table 2

**Table 2:**

| **Comparison of mechanical properties of panels prepared using formulation with 0% and 40% phenol replacement with NR Oil no 1.** | | | | | | | | |
|---|---|---|---|---|---|---|---|---|
| Resin | | | Press Cycle min | Density Kg/m3 | MOR MPa | | IB MPa | MOE MP |
| Code | Phenol replacement | pH | | | Dry | Wet | | |
| E-L-1-6 NR | 40% | 10.40 | 3.0 4.5 | 660 660 | 31.0 33.6 | 14.8 16.0 | 0.368 0.445 | 5554 5513 |
| E-K-4-6 Lab Control | 0 | 10.41 | 3.0 4.5 | 662 660 | 32.5 34.4 | 14.8 16.6 | 0.427 0.468 | 5638 5723 |
| CL-300 Ind. Control | 0 | 10.34 | 3.0 4.5 | 664 665 | 36.5 36.8 | 15.6 16.0 | 0.515 0.505 | 5426 5776 |
| Note : The pH of E-L-1-6 was adjusted to 10.40 prior to panel preparation. | | | | | | | | |

Panels produced using a resin composition comprising non-optimized NR substituted for 40% of phenol, exhibited properties equivalent to that of the industrial PF resin composition for press times of 4.5 min. The OSB prepared using NR based resins did not exhibit any difference in appearance compared with OSB's prepared using PF resins.

Without wishing to be bound by theory, it is possible that the organic acid content of the unprocessed NR based resin formulation may neutralize the caustic that is normally used to catalyse the condensation reaction used for the setting process of the OSB thereby requiring longer press times in order to ensure curing of the resin. These results indicate that a substantial proportion of phenol within PF resin formulations may be replaced with an NR fraction obtained from bio-oil.

### Example 3: NR-containing PF resin formulations - replacement of formaldehyde

Due to the natural aldehydes present within NR, a reduction in the amount of formaldehyde within PF resin formulations comprising NR was examined. Results indicate that up to 20% of the formaldehyde can be replaced with NR and the OSB still maintains properties of control OSB's.

A control PF resin was formulated having a F/P molar ratio of 2.16:1.00. Several NR based resins were prepared by replacing 40% of the phenol (w/w) and having a F/P molar ratio of 2.16:1.00, 1.8:1.00 or 1.50:1.00. The properties of the different resins used are listed in Table 3, where the following NR's were used:
NR - standard hardwood-derived unprocessed NR
NRP - washed NR
PO - softwood-derived NR

**Table 3:**

| **Physical and Chemical Characteristics of Resins** | | | | | | | | | |
|---|---|---|---|---|---|---|---|---|---|
| Material Code | Viscosity (cP) | Solid Content | Caustic Content (%) | pH After Caustic | Final pH | Gel Time (sec) | Free Phenol (%) | Free HCHO (%) | Molar Ratio (HCHO: Phenol) |
| PF Control | 98.5 | 41.9 | 5.7 | 9.25 | 10.36 | 609 | 0.64 | 1.68 | 2.16:1.00 |
| NR | 226.5 | 43.5 | 8.02 | 9.1 | 10.28 | 507 | non detected | 7.18 | 2.16:1.00 |
| NRP | 73 | 41.4 | 5.7 | 8.85 | 9.92 | 485 | non. detected | 10.17 | 2.16:1.00 |
| NR | 73 | 41.2 | 8.02 | 9.1 | 10.27 | 560 | * | 2.17 | 1.80:1.00 |
| PO | 79 | 42.6 | 8.02 | * | 10.19 | 873 | * | 0.86 | 1.50:1.00 |

| | | | | | | | | | |
|---|---|---|---|---|---|---|---|---|---|
| *=Data not available | | | | | | | | | |

OSB panels were prepared and tested as defined in Example 2 using CL300 (industry control), control, NR, NRP or PO based PF resin formulations defined in Table 3. Except that only a 3 min press time was used. The results of the tests are presented in Tables 4 and 5.

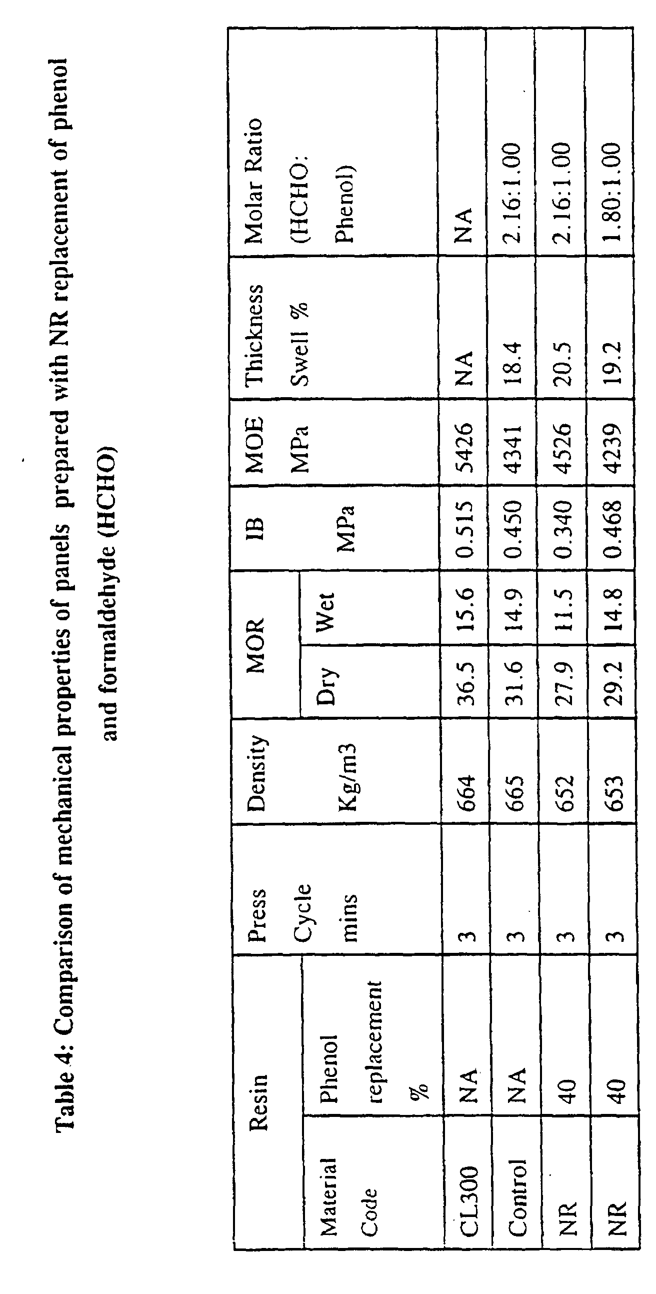

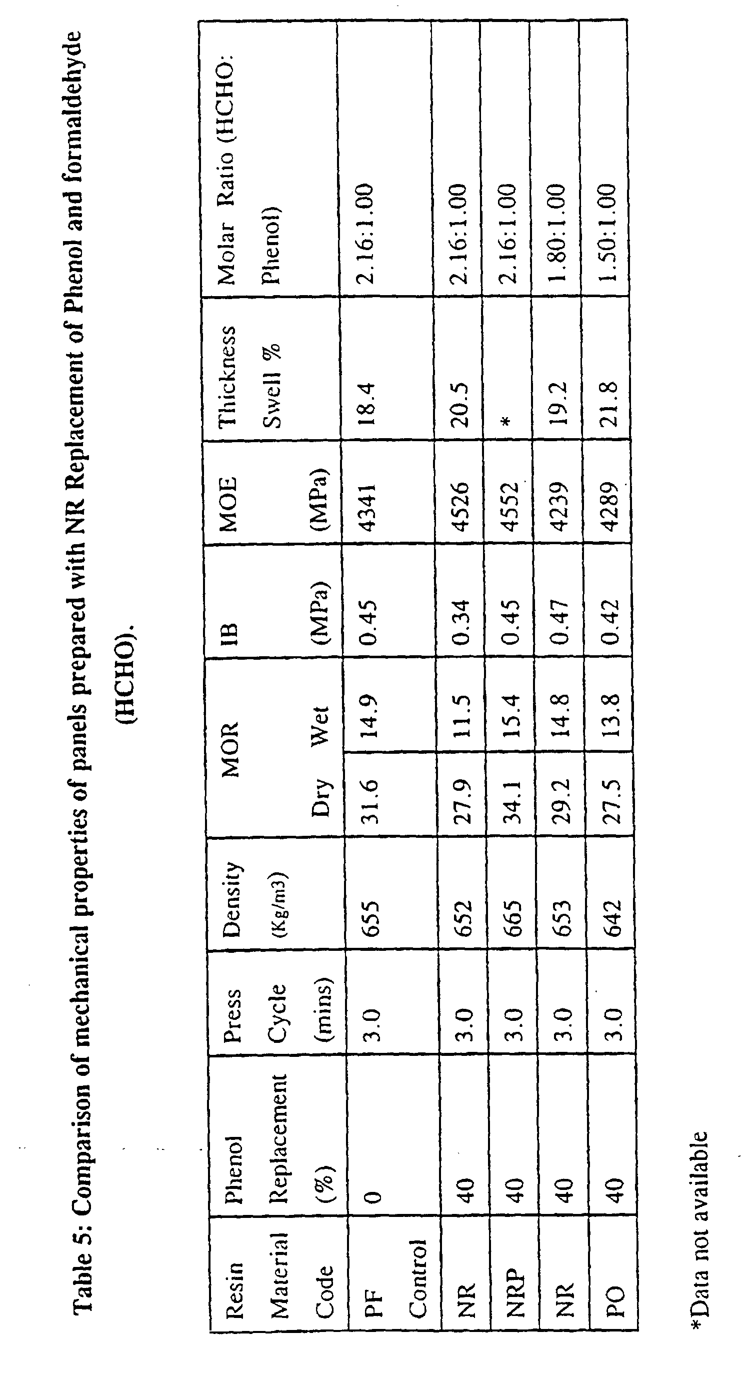

From the results it can be seen that OSB's prepared using a F/P molar ratio of 1.80:1.00 gave equivalent results to that produced using PF resins with 3 min press times. Also, NRP-containing resins exhibit similar properties to that of commercially available PF resins. These results also indicate that softwood-derived non-optimized unprocessed NR may also be used within PF resin formulations.

### Example 4: PF resin formulations comprising NR

A series of PF resins were prepared with the compositions listed in Table 6. The base phenol-formaldehyde resin composition was a resol-type resin pH 11 with a P:F ratio of 2.5:1. The NR used in the sample preparations was obtained as described in Example 1.

**Table 6:**

| **PF resin compositions** | | | | | |
|---|---|---|---|---|---|
| Sample | Phenolic resin | Quebracho tannin* | NR | Triacetine** | P:F |
| | % (w/w) | % (w/w) | %(w/w) | %(w/w) | ratio |
| A | 100 | 0 | 0 | 2 | 2.5 |
| B | 81 | 0 | 19 | 2 | 2.5 |
| C | 62 | 0 | 38 | 2 | 2.5 |
| D | 40.5 | 40.5 | 19 | 2 | 1.6 |

| | | | | | |
|---|---|---|---|---|---|
| * quebracho tannin (273 g/mol monomeric molecular equivalent) was used as a natural phenolic additive. | | | | | |
| ** triacetine was used as an accelerator of the resin. | | | | | |

These samples were used to prepare particle boards under the following conditions:
- press temperature:: 175°C
- maximum pressure:: 30 Bar
- thickness:: 9.0 mm
- press time:: 15 s/mm
- degassing time:: 30 sec.

The prepared panels exhibited the characteristics as disclosed in Table 7:

**Table 7:**

| **Characteristics of particle board panels prepared using the resins of Table 6.** | | | | |
|---|---|---|---|---|
| Sample | Internal bond (N/mm²) | Bending Strength (N/mm²) | Swelling * (%) | Density (Kg/m³) |
| A | 1.30 | 22.5 | 15 | 830 |
| B | 1.30 | 22.1 | 26 | 830 |
| C | 1.15 | 21.0 | 45 | 825 |
| D | 1.25 | 22.0 | 32 | 825 |

| | | | | |
|---|---|---|---|---|
| *measured after 24 hours soaking at 20°C | | | | |

These results indicate that NR can be substituted for phenol, up to 40%, within PF resin compositions with no significant effect on internal bond or bending strength.

### Example 5: Urea-formaldehyde resins formulated with unprocessed NR.

A commercially available UF resin (L2600) produced by Rescol (Italy) was used having a 63% dry content, and a formaldehyde:urea ratio of 1.2:1. This resin was used as a base resin for a series of UF formulations comprising NR, obtained as outlined in Example 1. Particle boards were prepared as defined in Example 6, with a total of 12% dry glue on dry wood. The resin compositions and test results are disclosed in Table 8. The amounts were calculated for dry resin and dry wood. The glue mixtures were all hardened with 1.5% ammonium sulphate.

**Table 8:**

| **UF Adhesive mixtures used, and mechanical characteristics of particle board prepared with the defined adhesive compositions.** | | | | | | |
|---|---|---|---|---|---|---|
| Sample | UF %* | NR %* | Internal Bond (n/mm²) | Bonding strength (n/mm²) | Swelling**% | Density (Kg/m3) |
| A | 12 | 0 | 1.30 | 21.2 | 24 | 720 |
| B | 6 | 0 | 0.60 | 9.3 | 50 | 725 |
| C | 7.2 | 4.8 | 1.15 | 15.7 | 35 | 720 |
| D | 6 | 6 | 0.70 | 13.2 | 48 | 710 |

| | | | | | | |
|---|---|---|---|---|---|---|
| * (w/w) | | | | | | |
| **measured after 24 hours soaking at 20°C | | | | | | |

The results of Table 8 demonstrate that with reduced amounts of UF (note: no added NR), several of the particle board characteristics deteriorate (compare A and B). However, the addition of NR (see D) enhances the characteristics observed within the UF-prepared panel. Furthermore, replacement of 40% of the UF within the resin formulation produces a similar particle board product as that prepared with UF resin.

### Example 6: Testing of different unprocessed NR's within PF adhesives at various formaldehyde mole ratios.

Several different NR preparations were tested within PF resin formulations. The NR's were obtained as outlined in Example 1, except that pine was used as the feedstock.

The formaldehyde: phenol molar ratio tested were 1.5:1 1 and 1.8:1, with 40% of the phenol replaced by NR. The characteristics of the PF resin formulations comprising NR are defined in Table 9.

**Table 9:**

| **Physical and chemical characteristics of resins** | | | | | | |
|---|---|---|---|---|---|---|
| | Viscosity (cP) | Solid content (%) | Caustic Content (%) | final pH | gel time (sec) | Molar ratio P:F |
| Control E-H-2-7 | 126 | 42.1 | 5.7 | 10.31 | 518 | 2.16 |
| E-1-2-7 | 120 | 41.7 | 8.18 | 10.11 | 530 | 1.8 |
| E-1-3-7 | 113 | 42.2 | 7.9 | 10.05 | 568 | 1.5 |
| E-1-4-7 | 220 | 41.7 | 8.32 | 10.19 | 621 | 1.5 |
| E-1-5-7 | 3260 | 41.6 | 7.49 | 10.22 | 335 | 1.8 |

The resin formulations of Table 9 were used for the production of OSB's under the following conditions:
- Replications:: 4 per press cycle
- strands:: 3 in poplar
- support:: cauls
- panel type:: homogeneous
- thickness:: 11.1 mm
- resin content:: 2.0%
- MC%:: 5.0%
- press cycle:: 3.0 min (includes 30 sec closing and 30 sec opening)
- press temp:: 215°C
- wax:: 1.5%

The boards were tested for internal bond strength (IB), modulus of rupture (MOR), modulus of elasticity (MOE), torsion shear (TS) and some panels were tested for thickness swelling (ThS). The results of these test are presented in Table 10.

**Table 10:**

| **effect of formaldehyde:phenol molar ratio on mechanical properties for a softwood NR (pine), and "conditioned NR".** | | | | | | | | |
|---|---|---|---|---|---|---|---|---|
| | Phenol (%) | Density (Kg/m³) | MOR (MPa) | | IB (MPa) | MOE (MPa) | TS (in.lb) | ThS (%) |
| | | | dry | wet | | | | |
| Control E-H-2-7 | 100 | 685 | 35.4 | 17.8 | 0.429 | 5483 | 30.5 | n.d. |
| E-1-2-7 | 60 | 680 | 34.3 | 16.1 | 0.387 | 5413 | 21.9 | n.d. |
| E-1-3-7 | 60 | 680 | 42.8 | 15.1 | 0.340 | 6101 | 18.7 | n.d. |
| E-1-4-7 | 60 | 680 | 35.4 | 14.4 | 0.378 | 5618 | 16.2 | n.d. |
| E-1-5-7 | 60 | 680 | 27.7 | 11.5 | 0.325 | 4720 | 8.8 | n.d. |

The results of Table 10 demonstrate that PF resins, containing 40% NR derived from softwood (pine), at a formaldehyde:phenol ratio of 1.8:1 or 1.5:1, produces OSB's with comparable properties to OSB's prepared using commercial PF resin formulations with a formaldehyde:phenol ratio of 2.16:1.

### Example 7 - Testing of NR60 with PF Adhesives

Eleven 3' x 3' x 0.5" plywood panels were manufactured in order to evaluate the effects of varying concentrations NR60 substitution for phenol in PF resin.

### 1.0 Plywood Panel Manufacture

### 1.1 Blending and Forming

Three different resin compositions were applied to pine veneers (Table 9). This resulted in three groups with a minimum of three panels per group. All applciations were made at a 35 lb/1000 ft² loading rate. All resins were applied using a plywood glue spreader and applied on a single glue line.

Billet lay-up for each panel consisted of four plies. The face plies were laid-up parallel to the machine direction and the core plies were laid-up perpendicular to machine direction. Three control panels control four PF/NR60, at 10% panels (Group NR60-10%), and four PF/NR60 at 20% (Group NR60 - 20%) panels were manufactured in the trial.

### 1.2 Pressing and Testing:

Before pressing, the billets were pre-pressed (cold) at 150 psi for four minutes in a 4' x 8' press. The panels were then transferred for hot pressing to a 3' x 3' press. The panels were pressed under constant pressure control for 300 seconds at 300°F. Pressing was monitored and controlled with a PressMAN© Press Monitoring System.

After pressing, the panels were trimmed to 28" x 28" dimensions and hot stacked. Once cooled, the panels were evaluated. The panels were tested for plywood glue bond and flexural creep (CSA 0151-M1978).

### 1.3 Observations

No resin quality differences were noted visually during panel manufacture. The control and NR substituted resins behaved in the same manner with equal spreadability. The shear data suggests the NR substituted resin performed as well as the control (Table 10). The NR60 - 10% and NR60 - 20% resins both performed comparably to the control, under both test conditions with respect to shear strength. The resins showed exemplary strength characteristics with the ply only failing on the glue bond a maximum of 12 % (PG2-88% average wood failure) under both test conditions. The strength of the NR-resin data is further supported by the fact not one sample demonstrated less than 60%, or less than 30#, wood failure under both test conditions.

**Table 9**

| Group ID | No. of Panels | Resin Type | Resin Loading | Pressing Time (sec) |
|---|---|---|---|---|
| Control | 3 | GP PF Resin (Control) | 35 lbs/1000ft²· single glue line | 300 |
| NR60-10% | 4 | GP PF/NR 10 Resin | 35 lbs/1000ft²· single glue line | 300 |
| NR60-20 % | 4 | GP PF/NR 20 | 35 lbs/1000ft²· single glue line | 300 |

**Table 10A**

| SUMMARY OF GEORGIA PACIFIC CONTROL AND GEORGIA PACIFIC NR RESIN PLYWOOD SHEAR TESTS: NR10 RESIN & NR20 RESIN | | | | | | |
|---|---|---|---|---|---|---|
| (Average values for ten specimens per panel from 3 panels per group) | | | | | | |

| Test Condition | Property | CSA 0151 Requirement | Units | Control | NR 60 10% | NR60 20% |
|---|---|---|---|---|---|---|
| Vacuum- Pressure | Shear Strength | No. Req. | psi | 89 | 102 | 88 |
| Soak: | | | | | | |
| | Percent Wood | 80 | % | 95 | 90 | 88 |
| | Failure | | | | | |
| | Average | | | | | |
| | Percent Wood | 90 | % | 100 | 100 | 100 |
| | Failure> =60 | | | | | |
| | Percent Wood | 95 | % | 100 | 100 | 100 |
| | Failure> =30 | | | | | |
| Boil-Dry Boil: | Shear Strength | No. Req. | psi | 79 | 80 | 69 |
| | Percent Wood | 80 | % | 91 | 90 | 91 |
| | Failure - | | | | | |
| | Average | | | | | |
| | Percent Wood | 90 | % | 93 | 100 | 100 |
| | Failure> = 60 | | | | | |
| | Percent Wood | 95 | % | 100 | 100 | 100 |
| | Failure> = 30 | | | | | |

### Introduction

### Example 8. NR-60 used at 25% for the Preparation of Plywood and OSB Panels

A total of seventeen 3' x 3' x 0.50" OSB, and fifteen 3' x 3' x 0.50" plywood panels were manufactured to evaluate the effects of 25% substitution of NR60 for phenol in PF resin, for both OSB and plywood.

### 1.0 OSB Panel Manufacture

### 1.1 Blending and Forming:

The resins were supplied by Neste in the following formats: Neste PF face control #1, Neste PF core control #2 and Neste PF/NR-60 - 25% (experimental). Three groups of panels were manufactured as indicated in Table 11. The control group (SNC) consisted of the Neste face control #1 resin applied to the strands along with commercial E-wax; the strands were then formed into random homogenous mats. The first experimental group (SNE) consisted for the substitution of the Neste PF/NR60 - 25 % resin for the face control resin in the same manufacturing methodology. The final experimental OSB group (SN) utilized Neste PF/NR 60-25 % on the panel face strands and the Neste core control #2 on the panel core strands. The SN mats were of 50/50 face-core random construction.

**TABLE 11.**

| **PF AND PF-NR60 RESIN OSB TESTS** | | | | | | |
|---|---|---|---|---|---|---|
| Group ID | No. of Panels | Resin Content | PANEL SPECIFICATIONS | | | |
| | | | Construction | Thickness (in.) | Density (lb/ft³) | Comments |
| SNC | 8 | Neste PF Face resin, 3.5% (Control #1) | Homogenous | 0.5 | 39 | OSB control |
| SNE* | 6 | Neste PF/NR 25, 3.5% | Homogenous | 0.5 | 39 | OSB Trial |
| SN** | 3 | Face: Neste PF/NR 25, 3.5% Core: Neste PF core resin, 3.5% (Control #2) | 50/50 face-core | 0.5 | 39 | Face NR Substitute Core Control on OSB |

| | | | | | | |
|---|---|---|---|---|---|---|
| * NR/RF resin used on the surface and core of the OSB | | | | | | |
| ** NR/PF resin used on surface only | | | | | | |

All resins were applied at a 3.5% solids basis. The commercial e-wax was applied at a 1.0% solids basis. All billets were hand formed to yield a density of 39 lb/ft³ when pressed to a thickness of 0.5".

### 1.2 Pressing and Testing:

After formation, the mats were then pressed utilizing a standard OSB pressing cycle. The total pressing time was set to a conservative 400-second cycle to ensure complete cure of the applied resin. Pressing was monitored and controlled with a PressMAN© Press Monitoring System.

After pressing, the panels were removed, trimmed to 28" x 28" dimensions, then measured for out-of-press thickness and density.

After the measurements were made, the panels were hot-stacked. Upon cooling, the panels were tested to CSA of 0437.2 - 93 for: MOR/MOE, IB, bond durability (2hr and 6hr cycles), thickness swell (24hr soak), and linear expansion (ODVPS) as well as flexural creep.

### 2.0 Plywood Panel Manufacture

### 2.1 Glue Spreading and Veneer Lay Up

The plywood portion of the study involved the gluing and lay up of commercial pine veneers. Two plywood resins were used for the study. The first resin was identified as the Neste PF (plywood control) while the second was identified as Neste PF/NR 25 (plywood experimental).

The resins were applied to the veneers using a glue spreader. A rate of 35 lbs.per 1000ft², applied on a single glue line was utilized. The lay up consisted of two face veneers, parallel to machine direction, and two core veneers, perpendicular to machine direction, for each panel. Eleven control (Group PNC) and four experimental (Group PNE) panels, were manufactured (Please refer to Table 12).

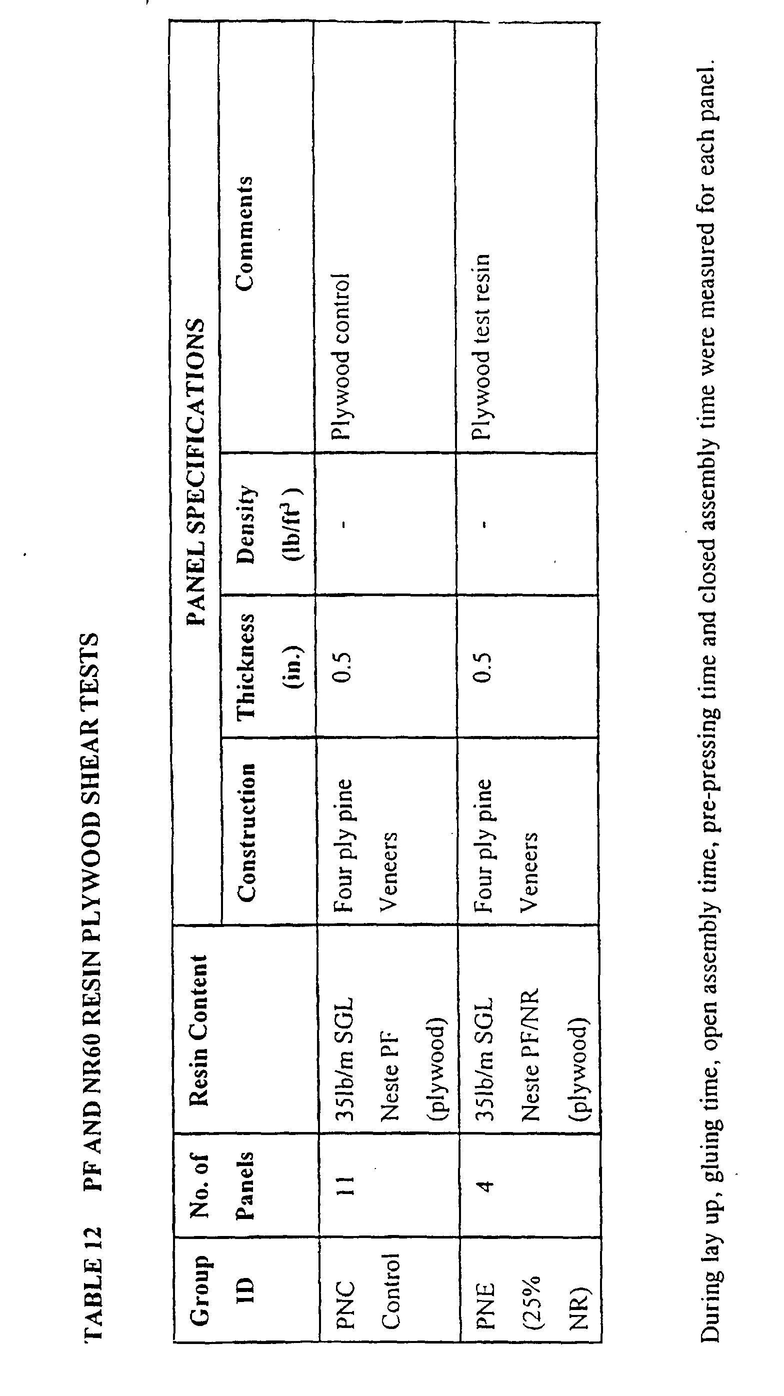

### 2.2 Pressing and Testing

After pre-pressing at four minutes and 150 psi, the billets were placed in a press for final cure and pressing. The first seven control panels (PNC 1-7) were used to establish the pressing time. This resulted in the establishment of 300 seconds as the required pressing time. Pressing was monitored and controlled via a PressMAN© Press Monitoring System.

After pressing, the panels were then trimmed to 28" x 28" dimensions then hot stacked. Upon cooling, the panels were evaluated. Testing consisted of glue-bond shear and flexural creep evaluation.

### 3.0 Observations and Results

Virtually no difference was observed between the control and NR substitution resins. Color, viscosity and spreadability for all resins seemed equal. A slightly different odor was noted in the NR resins versus the controls. This odor did not prove to be pervasive or intrusive however. Otherwise, all resins appeared to behave equally in a manufacturing situation.

A comparison of the NR substituted resins versus the control (SN, SNE, vs. SNC) show bending and bond properties to be equal between the three groups (Table 13). The results indicate, especially with group SN, a drop in bond durability and linear expansion versus the control. Group SN showed a value of water swell well within the maximum requirement.

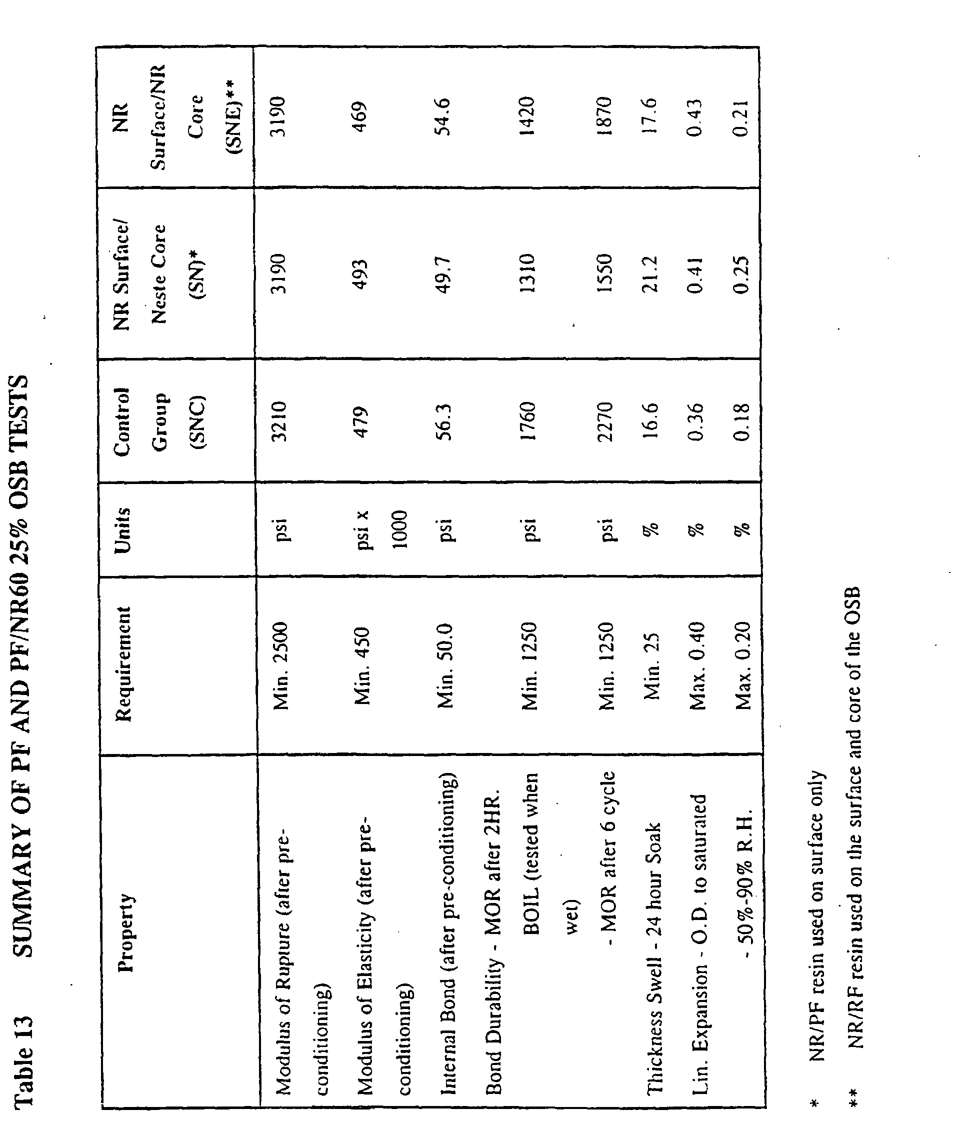

With respect to the plywood shear testing the results were favourable both against the standard and the control Group (Table 14). A strong bond was indicated by the shear strength performance under both test conditions. Under both conditions 11% or less failure could be attributed to the glue while the maximum allowable is 20% (89% wood failure for Group PNE under boil-dry-boil). A further indicator in the strength of the data was that not one PNE sample showed wood failure values of less than 60% or 30% under both test conditions (100% pass for both requirements on both test regimens).

**Table 14**

| SUMMARY OF PF AND PF/NR60 - 25% RESIN PLYWOOD SHEAR TESTS | | | | | |
|---|---|---|---|---|---|
| Test Condition | Property | CSA 0151 Requirement | Units | Control Group (PNC) | Neste NR/PF (PNE) |
| Vacuum- | Shear Strength | No. Req. | psi | 82 | 110 |
| Pressure Soak: | Percent Wood Failure Average | 80 | % | 87 | 93 |
| | Percent Wood Failure > =60 | 90 | % | 93 | 100 |
| | Percent Wood Failure > =30 | 95 | % | 100 | 100 |
| Boil-Dry Boil: | Shear Strength | No. Req. | psi | 74 | 83 |
| | Percent Wood Failure Average | 80 | % | 89 | 89 |
| | Percent Wood Failure > =60 | 90 | % | 100 | 100 |
| | Percent Wood Failure > =30 | 95 | % | 100 | 100 |

### Example 10. Use of NR60 at 40% in the production of OSB panels

An experimental resin formulation was used to prepare four 40% phenol substitution resins using NR60 (formaldehyde to phenol ratio 1.6:1) from four different samples (labelled NR60-D, NRB 166, 1°CT, and CALCT). A lab control was also prepared and used as reference for the evaluation of all experimental resins. NRB is an NR60 obtained from bark.

The performance of the formulated resins has been evaluated by testing the mechanical properties such as internal bond strength (IB), modulus of elasticity (MOE), modulus of rupture (MOR, dry and wet), torsion shear, thickness swelling and water absorption from 20 OSB panels manufactured with the five resins. All the resins were characterised using several standard best methods such as solids content; viscosity, pH, gel time and free formaldehyde.

### Panel general parameters:

Replicates: 4
Strands: 3-in, poplar
Support: screen
Panel type: homogenous
Thickness: 11.1 mm
Target density: 640 kg/m³
Press temp: 215°C
Press cycle: 3.0 min
Moisture content: 5.0%
Wax content: 1.5%
Resin content: 2.0%

### Test Results

Table 15 shows the physical and chemical characteristics of the resins formulated from the different NR60 - 40% samples (NR60-D, NRB 166, 1°CT and CALCT). The results obtained with the phenol/formaldehyde control are included for comparison. In every case, the resin formulated with NR60 needed 1.5 to 2.2 % more caustic catalysts to produce a resin with an equivalent pH to the control. The pH and viscosity values of E-F-4-8 and E-F-5-8 resins are similar to the control but show less advanced characteristics for E-F-2-8, and E-F-3-8. The same factor applies to the gel time obtained with the four experimental resins even if it takes longer than the lab control value.

Table 16 summarizes the OSB test results for E-F-2-8 (NR60-D), E-F-3-8 (1°CT), E-F-4-8 (CALCT) and E-F-5-8 (NRB166), compared to E-F-1-8 (lab control). Results regarding the internal bond and the torsion shear are lower than the control. MOE and MOR values (dry and wet) are similar to the control. For thickness swell and water absorption, except E-F-4-8 (CALCT) that gives better values, results were also lower than for the control.

### Conclusion

Of all the resins E-F-4-8 (CALCT oil) gave the best results. The other three had lower results in almost every test.

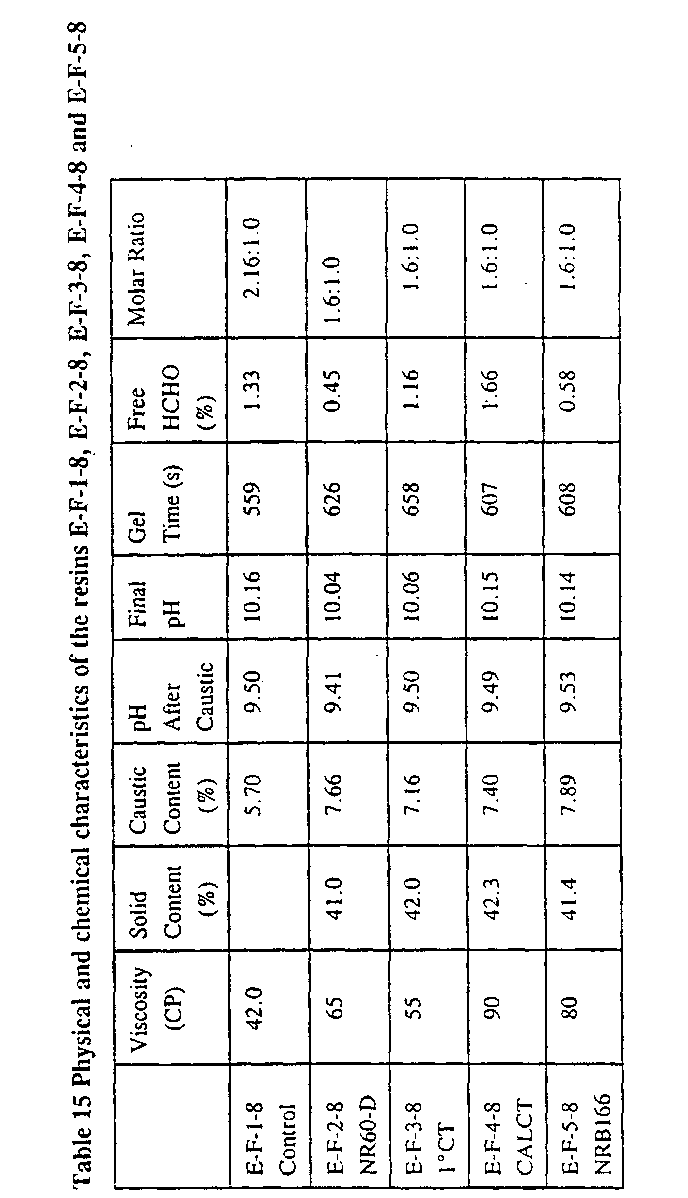

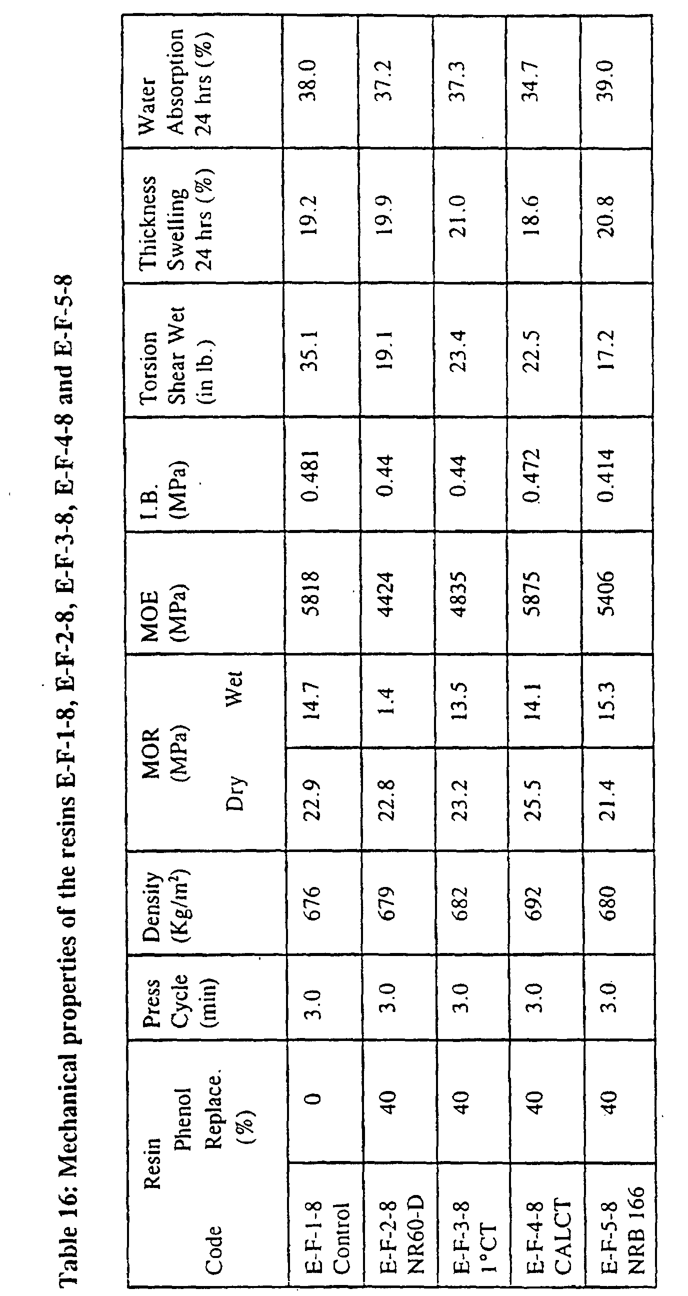

### References:

Chum et al., 1989, ACS Symposium Series No. 385, Adhesives from Renewable Resources, Hemingway R.W. Conner A.H. eds, American Chemical Society, pp. 135-151.

Forss K.G., Fuhrmann, A. 1979 Finnish plywood, particle board, and fibreboard made with a lignin-based adhesive. Forest Prod. J. vol 29, pp. 39-43.

Himmelblau D. A., Grozdits G.A. 1997, Production of wood composite adhesives with air-blown, fluidized-bed pyrolysis oil.

Kelley et al., 1997, Use of Biomass pyrolysis oils for preparation of modified phenol formaldehyde resins, Vol 1 pp. 557-172

Pakdel, H., Amen-Chen, C., Zhang, J., Roy, C. 1996, Phenolic compounds from vacuum pyrolysis of biomass, pp. 124-131, CPL press

Scott 1988, Chemicals and fuels from biomass flash pyrolysis - part of the bioenergy development program, Renewable Energy Branch, Energy Mines and Resources Canada, Ottawa, Canada, DSS Contract File No. 38ST 23216-6-65164;

Sellers 1996; Adhesives Age vol 39: pp. 6-9

White 1995; Forest Prod J. vol 45, pp.21-28

## Claims

1. A processed natural resin comprising ;
(i) free phenol content from 0.001% to 0.1 % (w/w);
(ii) a total phenolic content from 64% to 73% (w/w);
(iii) a smoky odour;
(iv) an acids content of up to 5% (w/w) and
(v) a carbonyl compound content of between 22-27 %(w/w).

2. A method for preparing the processed natural resin of claim 1 comprising the steps of:
i) obtaining a product vapour stream from a fast pyrolysis biomass reactor;
ii) exposing the product vapour stream to a first rapid quenching step so as to remove a first set of components from the product vapour stream, thereby producing a selected product vapour stream; and
iii) exposing the selected product vapour stream to a second rapid quenching step; to produce a product
iv) processing the product to reduce organic acid content thereby producing the processed natural resin.

3. A method according to Claim 2, wherein the organic acid content is removed by mixing the product with water, allowing phase separation to occur, and recovering an oil fraction; wherein the oil fraction comprises the processed natural resin (NRP).

4. An adhesive resin composition comprising:
up to 40% (w/w) of a processed natural resin, of Claim 1;
phenol or urea, or phenol and urea;
and formaldehyde.

5. An adhesive resin composition comprising:
up to 60% (w/w) of a processed natural resin, of Claim 1;
phenol or urea, or phenol and urea; and
formaldehyde.

6. An adhesive resin composition according to claims 4 or 5, wherein the formaldehyde/ phenol (F/P) molar ratio is between 10:1 1 and 1.5:1.

7. An adhesive resin composition according to Claim 6, wherein the formaldehyde/phenol (F/P) molar ratio is between 2.5:1 and 1.5:1.

8. An adhesive resin composition according to Claim 7, wherein the formaldehyde/phenol (F/P) molar ratio is about 1.8:1.

9. An adhesive resin composition according to Claim 4, in which up to 60% of the phenol content is substituted with the processed natural resin.

10. An adhesive resin composition according to Claim 5, in which 100% of the phenol content is substituted with a processed natural resin.

11. A natural resin composition comprising:
approximately 50% of a processed natural resin of Claim 1; and
approximately 50% of a natural resin, the natural resin prepared by
i) obtaining a product vapour stream from a fast pyrolysis biomass reactor;
ii) exposing the product vapour stream to a first rapid quenching step so as to remove a first set of components from the product vapour stream, thereby producing a selected product vapour stream; and
iii) exposing the selected product vapour stream to a second rapid quenching step to produce the natural resin.

12. A board product comprising the processed natural resin-containing adhesive composition of any of Claims 4-10.

13. A board product according to Claim 12, wherein the board product is selected from: laminated wood, plywood, particle board, high density particle board, oriented strand board, medium density fibre board, hardboard or wafer board.

14. An oriented strand board product according to Claim 13, comprising a processed natural resin-containing adhesive with an F/P ratio of 1.8:1.0.

15. Use of a processed natural resin-containing adhesive composition according to any of Claims 4-10, in the manufacture of a board product.

16. Use according to Claim 15, wherein the board product is selected from: laminated wood, plywood, particle board, high density particle board, oriented strand board, medium density fibre board, hardboard or wafer board.

## Patentansprüche

1. Bearbeitetes natürliches Harz, umfassend:
i) einen Gehalt an freiem Phenol von 0,001 % bis 0.1 % (w/w);
ii) einen phenolischen Gesamtgehalt von 64 % bis 73 % (w/w);
iii) einen rauchigen Geruch;
iv) einen Gehalt an Säuren von bis zu 5 % (w/w),
v) einen Gehalt an Carbonylverbindung von zwischen 22-27 % (w/w).

2. Verfahren zur Herstellung des bearbeiteten natürlichen Harzes gemäß Anspruch 1, bei dem man:
i) einen Produkt-Dampfstrom von einem Biomasse-Reaktor für schnelle Pyrolyse erhält;
ii) den Produkt-Dampfstrom einem ersten schnellen Abschreckschritt aussetzt, sodass eine erste Gruppe von Bestandteilen aus dem Produkt-Dampfstrom entfernt wird, wodurch ein ausgewählter Produkt-Dampfstrom erzeugt wird; und
iii) den ausgewählten Produkt-Dampfstrom einem zweiten schnellen Abschreckschritt aussetzt, um ein Produkt herzustellen;
iv) das Produkt bearbeitet, um den Gehalt an organischer Säure zu reduzieren, wodurch das bearbeitete natürliche Harz hergestellt wird.

3. Verfahren gemäß Anspruch 2, **dadurch gekennzeichnet, dass** der Gehalt an organischer Säure durch Mischen des Produktes mit Wasser entfernt wird, es erlaubt wird, dass eine Phasentrennung auftritt, und eine Ölfraktion gewonnen wird, wobei die Ölfraktion das bearbeitete natürliche Harz (NRP) umfasst.

4. Adhäsive Harz-Zusammensetzung, umfassend:
bis zu 40 % (w/w) eines bearbeiteten natürlichen Harzes gemäß Anspruch 1;
Phenol oder Harnstoff, oder Phenol und Harnstoff;
und Formaldehyd.

5. Adhäsive Harz-Zusammensetzung, umfassend:
bis zu 60 % (w/w) eines bearbeiteten natürlichen Harzes gemäß Anspruch 1;
Phenol oder Harnstoff, oder Phenol und Harnstoff; und
Formaldehyd.

6. Adhäsive Harz-Zusammensetzung gemäß den Ansprüchen 4 oder 5, **dadurch gekennzeichnet, dass** das molare Verhältnis von Formaldehyd/Phenol (F/P) zwischen 10 : 1 und 1,5 : 1 beträgt.

7. Adhäsive Harz-Zusammensetzung gemäß Anspruch 6, **dadurch gekennzeichnet, dass** das molare Verhältnis von Formaldehyd/Phenol (F/P) zwischen 2,5 : 1 und 1,5 : 1 beträgt.

8. Adhäsive Harz-Zusammensetzung gemäß Anspruch 7, **dadurch gekennzeichnet, dass** das molare Verhältnis von Formaldehyd/Phenol (F/P) etwa 1,8 : 1 beträgt.

9. Adhäsive Harz-Zusammensetzung gemäß Anspruch 4, in der bis zu 60 % des Phenolgehaltes durch das bearbeitete natürliche Harz ersetzt sind.

10. Adhäsive Harz-Zusammensetzung gemäß Anspruch 5, in der 100 % des Phenolgehaltes durch ein bearbeitetes natürliches Harz ersetzt sind.

11. Natürliche Harz-Zusammensetzung, umfassend:
ungefähr 50 % eines bearbeiteten natürlichen Harzes gemäß Anspruch 1; und
ungefähr 50 % eines natürlichen Harzes, wobei das natürliche Harz hergestellt wird, indem man:
i) einen Produkt-Dampfstrom von einem Biomasse-Reaktor für schnelle Pyrolyse erhält;
ii) den Produkt-Dampfstrom einem ersten schnellen Abschreckschritt aussetzt, sodass eine erste Gruppe von Bestandteilen aus dem Produkt-Dampfstrom entfernt wird, wodurch ein ausgewählter Produkt-Dampfstrom erzeugt wird; und
iii) den ausgewählten Produkt-Dampfstrom einem zweiten schnellen Abschreckschritt aussetzt, um das natürliche Harz herzustellen.

12. Plattenerzeugnis, das die das bearbeitete natürliche Harz umfassende adhäsive Zusammensetzung gemäß einem der Ansprüche 4 bis 10 enthält.

13. Plattenerzeugnis gemäß Anspruch 12, **dadurch gekennzeichnet, dass** das Plattenerzeugnis ausgewählt ist aus: Schichtholz, Sperrholz, Spanplatte, hochdichte Spanplatte, Platte mit ausgerichteten Spänen ("oriented strand board"), mitteldichte Faserplatte, Hartfaserplatte oder Wafer-Platte.

14. Plattenerzeugnis mit ausgerichteten Spänen ("oriented strand") gemäß Anspruch 13, das ein das bearbeitete natürliche Harz enthaltendes Klebemittel mit einem F/P-Verhältnis von 1,8 : 1,0 umfasst.

15. Verwendung einer das bearbeitete natürliche Harz enthaltenden adhäsiven Zusammensetzung gemäß einem der Ansprüche 4 bis 10 bei der Herstellung eines Plattenerzeugnisses.

16. Verwendung gemäß Anspruch 15, **dadurch gekennzeichnet, dass** das Plattenerzeugnis ausgewählt ist aus: Schichtholz, Sperrholz, Spanplatte, hochdichte Spanplatte, Platte mit ausgerichteten Spänen ("oriented strand board"), mitteldichte Faserplatte, Hartfaserplatte oder Wafer-Platte.

## Revendications

1. Résine naturelle traitée, comprenant :
(i) une teneur en phénol libre allant de 0,001% à 0,1% (p/p) ;
(ii) une teneur phénolique totale allant de 64% à 73% (p/p) ;
(iii) une odeur de fumée ;
(iv) une teneur en acides de jusqu'à 5% (p/p), et
(v) une teneur en composé carbonylé allant de 22 à 27% (p/p).

2. Procédé de préparation de la résine naturelle traitée selon la revendication 1, comprenant les étapes de :
(i) obtention d'un courant de vapeurs de produit provenant d'un réacteur de biomasse à pyrolyse rapide ;
(ii) exposition du courant de vapeurs de produit à une première étape rapide de trempe de manière à éliminer une première série de composants du courant de vapeurs de produit, pour produire un courant de vapeurs de produit sélectionné, et
(iii) exposition du courant de vapeurs de produit sélectionné à une deuxième étape rapide de trempe, pour produire un produit, et
(iv) traitement du produit pour réduire la teneur en acides organiques de manière à produire la résine naturelle traitée.

3. Procédé selon la revendication 2, dans lequel la teneur en acide organique est éliminée en mélangeant le produit avec de l'eau, en laissant les phases se séparer, et en récupérant une fraction huileuse, où la fraction huileuse comprend la résine naturelle traitée (NRP).

4. Composition de résine adhésive, comprenant :
jusqu'à 40% (p/p) d'une résine naturelle traitée selon la revendication 1 ;
le phénol ou l'urée, ou le phénol et l'urée ; et
du formaldéhyde.

5. Composition de résine adhésive, comprenant :
jusqu'à 60% (p/p) d'une résine naturelle traitée selon la revendication 1 ;
le phénol ou l'urée, ou le phénol et l'urée ; et
du formaldéhyde.

6. Composition de résine adhésive selon la revendication 4 ou 5, dans laquelle le rapport molaire formaldéhyde/phénol (F/P) se situe dans l'intervalle allant de 10:1 à 1,5:1.

7. Composition de résine adhésive selon la revendication 6, dans laquelle le rapport molaire formaldéhyde/phénol (F/P) se situe dans l'intervalle allant de 2,5:1 à 1,5:1.

8. Composition de résine adhésive selon la revendication 7, dans laquelle le rapport molaire formaldéhyde/phénol (F/P) est d'environ 1,8:1.

9. Composition de résine adhésive selon la revendication 4, dans laquelle jusqu'à 60% de la teneur en phénol est remplacée par la résine naturelle traitée.

10. Composition de résine adhésive selon la revendication 5, dans laquelle 100% de la teneur en phénol est remplacée par une résine naturelle traitée.

11. Composition de résine naturelle, comprenant :
environ 50% d'une résine naturelle traitée selon la revendication 1 ; et
environ 50% d'une résine naturelle, la résine naturelle étant préparée par :
(i) obtention d'un courant de vapeurs de produit provenant d'un réacteur de biomasse à pyrolyse rapide ;
(ii) exposition du courant de vapeurs de produit à une première étape rapide de trempe de manière à éliminer une première série de composants du courant de vapeurs de produit, pour produire un courant de vapeurs de produit sélectionné ; et
(iii) exposition du courant de vapeurs de produit sélectionné à une deuxième étape rapide de trempe, pour produire la résine naturelle.

12. Produit de type panneau comprenant la composition adhésive contenant la résine naturelle traitée selon l'une quelconque des revendications 4 à 10.

13. Produit de type panneau selon la revendication 12, dans lequel le produit de type panneau est choisi parmi : le bois stratifié, le contre-plaqué, le panneau de particules, le panneau de particules de haute densité, le panneau orienté, le panneau de fibres de moyenne densité, le panneau dur ou le panneau gaufré.

14. Panneau orienté selon la revendication 13, comprenant un adhésif contenant une résine naturelle traitée ayant un rapport F/P de 1,8:1,0.

15. Utilisation d'une composition adhésive contenant la résine naturelle traitée selon l'une quelconque des revendications 4 à 10, dans la préparation d'un produit de type panneau.

16. Utilisation selon la revendication 15, dans laquelle le produit de type panneau est choisi parmi : le bois stratifié, le contre-plaqué, le panneau de particules, le panneau de particules de haute densité, le panneau orienté, le panneau de fibres de moyenne densité, le panneau dur ou le panneau gaufré.
